Europäisches Patentamt

European Patent Office

Office européen des brevets

(19)

(11) Veröffentlichungsnummer: **0 124 528**
**B1**

(12) # EUROPÄISCHE PATENTSCHRIFT

(45) Veröffentlichungstag der Patentschrift:
08.01.86

(51) Int. Cl.⁴: **F 16 H 49/00**

(21) Anmeldenummer: 83901712.6

(22) Anmeldetag: 09.06.83

(86) Internationale Anmeldenummer:
**PCT/EP 83/00148**

(87) Internationale Veröffentlichungsnummer:
**WO 83/04429 (22.12.83 Gazette 83/29)**

(54) SPANNUNGSWELLENGETRIEBE.

(30) Priorität: 11.06.82 DE 3222117

(43) Veröffentlichungstag der Anmeldung:
14.11.84 Patentblatt 84/46

(45) Bekanntmachung des Hinweises auf die Patenterteilung:
08.01.86 Patentblatt 86/2

(84) Benannte Vertragsstaaten:
CH FR GB LI

(56) Entgegenhaltungen:
DE - B - 1 173 759
FR - A - 2 468 797
US - A - 3 101 009
US - A - 3 119 283
US - A - 3 187 605
US - A - 3 196 713
US - A - 3 427 898

(73) Patentinhaber: ZF-HERION-SYSTEMTECHNIK GMBH,
Löwentaler Strasse 100 Postfach 2520,
D-7990 Friedrichshafen1 (DE)

(72) Erfinder: HEINEMANN, Fritz, Schnetzenhauser
Strasse 36, D-7990 Friedrichshafen 1 (DE)

(74) Vertreter: Raue, Reimund, Zahnradfabrik
Friedrichshafen AG Löwentaler
Strasse 100 Postfach 2520,
D-7990 Friedrichshafen 1 (DE)

## Beschreibung

Die Erfindung bezieht sich auf ein zwischen An- und Abtriebsseite abdichtbares Spannungswellengetriebe, insbesondere für einen Stellantrieb für Armaturen mit einem Spannungswellenerzeuger, einem verformbaren Spannungsrad mit Stützkörpern und mindestens einem Ringrad.

Die DE-C 29 44 123 zeigt ein Spannungswellengetriebe, bei dem die Antriebs- und die Abtriebswelle verschiedenen Druckräumen zugeordnet sind, dessen als Topfbüchse ausgebildetes Spannungsrad axial einseitig eingespannt und an seinem gegenüberliegenden Ende mit einem steifen Boden versehen ist. An diesem Boden angreifende, vom Systemdruck herrührende Axialkräfte müssen über die Mantelfläche des Spannungsrades abgeleitet werden, was zu deren Beulung und Knickung führen kann. Je nach der Höhe der eingeleiteten Kräfte ist ein sicherer Zahneingriff nicht mehr gewährleistet oder die Büchse wird bleibend verformt und dadurch unbrauchbar. Versuche zeigten, dass die Topfbüchse keine längere Betriebsdauer erträgt. Die Lebensdauer eines derart ausgestalteten Spannungsrades ist niedrig. Zwar werden die seitlich an der Mantelfläche des Spannungsrades angreifenden Kräfte durch Stützkörper abgefangen, am Boden des Spannungsrades angreifende Druckkräfte können jedoch durch die starren Stützkörper nicht abgeleitet werden. – Der Differenzdruck erfordert dabei im Bereich des Spannungsrades immer noch relativ dicke Wandstärken, was die Walkarbeit durch den Spannungswellenerzeuger zusätzlich erhöht. Zudem zerrt die Wechselspannung an einem relativ grossen Dichtbund der Topfbüchse und beeinträchtigt dabei auch die Andichtung am Gehäuse.

Der Erfindung liegt die Aufgabe zugrunde, ein Spannungswellengetriebe mit hervorragender Abdichtbarkeit zu schaffen, das so aufgebaut ist, dass es höheren Drücken als das bekannte Getriebe nach dem Oberbegriff von Anspruch 1 widerstehen kann und dass dabei eine höhere Lebensdauer als bisher erreicht wird.

Erfindungsgemäss wird die Aufgabe durch die im Kennzeichen des Anspruches 1 aufgeführten Merkmale gelöst.

Die Erfindung weist gegenüber dem Bekannten die Vorteile auf, dass schadlos wesentlich höhere Systemdrücke als bisher auf das Spannungswellengetriebe einwirken können und dennoch eine höhere Lebensdauer als bisher erreichbar ist. Hierdurch ist das Getriebe vielseitiger als bisher einsetzbar und die Reparaturintervalle werden erheblich länger.

Die beiderseitige becherförmige, offene Ausgestaltung des erfindungsgemässen Spannungsrades und der damit am stirnseitigen Rand dicht verbundenen beiden Stützkörper, die in Randnähe dank weitgehender Entlastung vom Differenzdruckeinfluss relativ dünnwandig ausführbar sind, ermöglicht eine Beulspannungsminderung bei viel gleichmässigerer Spannungsverteilung im Spannungsrad und an den Stützkörpern, so dass die Wechselbruchgefahr erheblich reduziert werden konnte und vergleichsweise höhere Druckbelastungen möglich werden.

Vorteilhaft ist auch, dass nun die Verbindung der Stützkörper zum Gehäuse nicht mehr über einen Teil des Spannungsrades selbst vorgesehen ist, sondern über ein erheblich dünneres Rohr zwischen Boden und Gehäusedeckel, welches dort mit kleinem, von den Wechselbiegungen des Spannungsrades praktisch freigehaltenem Dichtflansch viel zuverlässiger andichtbar ist.

Dadurch, dass die Böden der Stützkörper nun knapp vor dem Spannungswellenerzeuger zu liegen kommen und der übrige Bereich den hohen Druck beidseitig aufnimmt, ist deren vom Differenzdruck hoch beaufschlagter Mantelbereich nun vergleichsweise viel kleiner bzw. kürzer und daher auch mechanisch weit leichter verformbar als mit der auf ganzer Länge dem Differenzdruck ausgesetzten Topfbüchse bisheriger Bauart.

Nach einer Weiterbildung der Erfindung ist an den offenen Enden des Spannungsrades jeweils ein Membranring vorgesehen, über den das Spannungsrad jeweils mit dem betreffenden Stützkörper verbunden ist. Hierdurch erreicht man, dass auch die durch den Spannungswellenerzeuger in der zylindrischen Mantelfläche des Spannungsrades mit der Frequenz der Antriebsdrehzahl noch hervorgerufenen Axialverformungen ausgeglichen werden. Ferner werden durch die Axialflexibilität des Membranringes von der Mantelfläche auch Axialbewegungen der Stützkörper ferngehalten, die von Verformungen derselben bei Einwirkung von Systemdruck oder vom Spielausgleich fertigungsbedingter Toleranzen stammen.

Eine weitere Ausbildung der Erfindung sieht vor, dass sich der abtriebsseitige Stützkörper über ein Drucklager, den Spannungswellenerzeuger, ein weiteres Drucklager und den antriebsseitigen Stützkörper abstützt. Durch den an beiden Stützkörpern wirkenden Systemdruck muss über die Drucklager und den Spannungswellenerzeuger nur ein Teil der axialen Kräfte abgeführt werden.

Nach einem anderen Ausführungsbeispiel der Erfindung stehen die Stützkörper mit dem Gehäuse nur über ein gemeinsames Rohr in Verbindung, das am Umfang Öffnungen aufweist, durch die eine Getriebeverbindung (z.B. Planetengetriebe, Hydromotor, Elektromotor oder dergleichen) zum Spannungswellenerzeuger 12 vorgesehen ist.

Nach einer weiteren Ausbildung des Ausführungsbeispieles ist das Rohr im Bereich zwischen den beiden Stützkörpern als Planetenradträger ausgebildet, wobei der Antrieb des Spannungswellenerzeugers über ein Sonnenrad und Planetenräder erfolgt. Die Ausbildung des Rohres zur Verbindung und Lagerung der beiden Stützkörper gleichzeitig als Planetenradträger führt zu einer Vereinfachung dieses Ausführungsbeispieles bei unverändert vorteilhafter Abdichtungsweise.

Spannungswellengetriebe mit Planetenradsätzen zum Antrieb des Spannungswellenerzeugers wurden noch bekannt durch die GB-C 1 264 590 und die DE-C 11 82 011. – Beiden Antrieben fehlen jedoch Merkmale zur druckdichten Trennung von An- und Abtriebsseite oder Hinweise auf eine hohen Differenzdrücken gewachsene Stützung des Spannungsrades, das hier auch nicht zu beiden Seiten hin becherförmig ausgestaltet ist. —

Die Erfindung wird an zwei Ausführungsbeispielen anhand von Zeichnungen erläutert. Es zeigen

Fig. 1 in perspektivischer Darstellung, teilweise im Schnitt, das erfindungsgemässe Spannungswellengetriebe mit angesetztem Motor sowie einer Schieberarmatur,

Fig. 2 einen Schnitt durch das Getriebe entlang einer Linie II-II in Fig. 1,

Fig. 3 in vergrösserter Darstellung einen Ausschnitt der Schnittdarstellung nach Fig. 2 mit jeweils einem Teil des freien Endes des Spannungsrades, eines Stützkörpers und eines Membranringes,

Fig. 4 schematisch ein anderes Ausführungsbeispiel mit einem Rohr zum Halten beider Stützkörper.

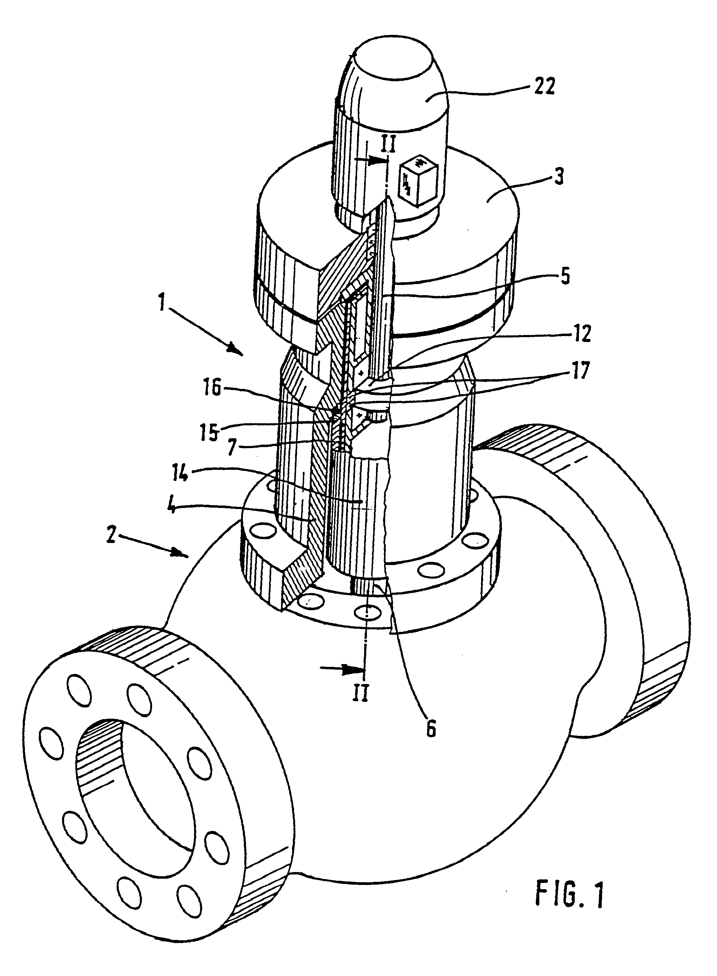

Eine Armatur, z.B. ein Schieber 2 (Fig. 1), ist mit einem Stellantrieb 1 versehen. Dieser ist in einem Gehäuse, bestehend aus Gehäuseteilen 3, 4, untergebracht und hat eine Antriebswelle 5, mit der ein Handrad, ein -hebel oder die Abtriebswelle eines Motors 22 drehfest zur Betätigung des Stellantriebes 1 verbunden sind.

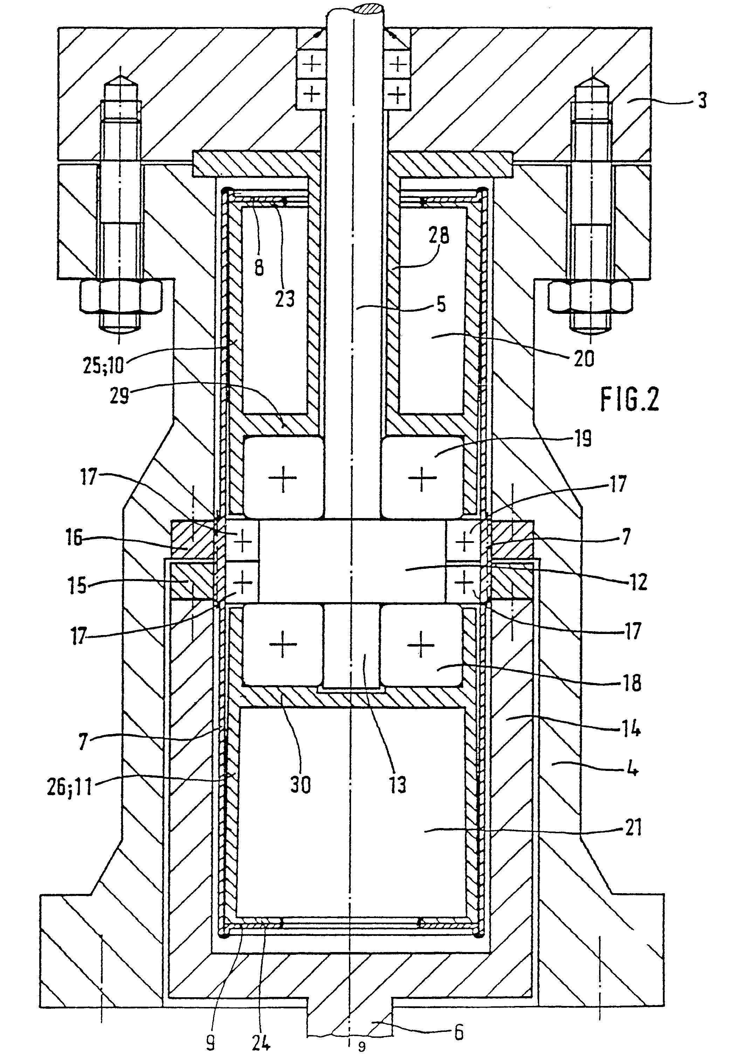

Beim Ausführungsbeispiel ist die Antriebswelle 5 einerseits in einem Gehäuseteil 3 (Fig. 2) gelagert und andererseits mittels Rollen 18 und 19, die jeweils ein Drucklager bilden. Zu dem Spannungswellengetriebe gehört ferner ein Spannungswellenerzeuger 12, der in an sich bekannter Weise ellipsenartig geformt und drehfest mit der Antriebswelle 5 verbunden ist. Er ist seinerseits von Rollen 17 (Fig. 1, 2) umgeben, die zu einem Radiallager gehören.

Ein Stützkörper 10 ist einseitig, beim Ausführungsbeispiel zwischen den Gehäuseteilen 3 und 4, fest eingespannt. Er ist mit einem Rohrabschnitt 28, einem Boden 29 und einem tragenden Mantel 25 als Hohlkörper ausgebildet, der einen Raum 20 teilweise umschliesst. Der andere Stützkörper 11 weist einen Boden 30 sowie einen Mantel 26 auf. In seinem Boden 30 kann ein Wellenende 13 der Antriebswelle 5 drehbar gelagert sein.

Von den beiden Stützkörpern 10, 11 wird ein als beidseitig offener Hohlzylinder aufgebautes Spannungsrad 7 gehalten. Dieses ist an seinen offenen Enden jeweils mit einem der beiden Stützkörper 10 bzw. 11 druckdicht verbunden. Auf der Aussenseite des Spannungsrades 7 befindet sich eine Verzahnung, die beim Ausführungsbeispiel einmal mit der Innenverzahnung eines gehäusefest angebrachten Ringrades 16 und zum anderen mit der Innenverzahnung eines drehbaren Ringrades 15 in Eingriff steht. Über eine Hohlwelle 14 und eine mit ihr drehfest verbundene Abtriebswelle 6 erfolgt der Abtrieb des Getriebes.

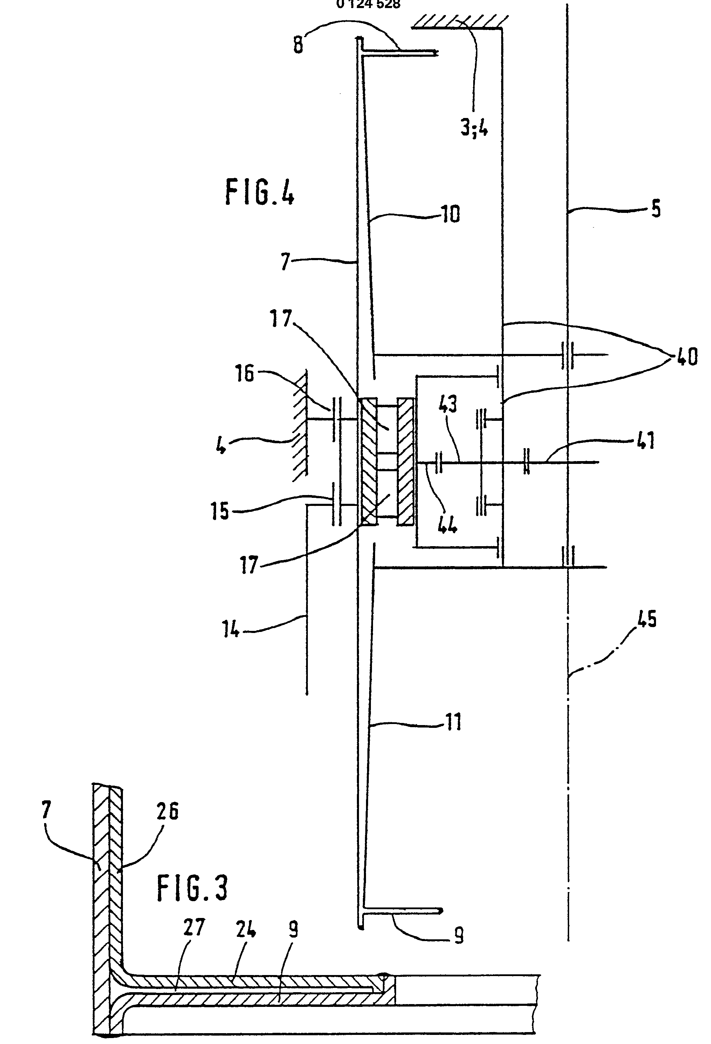

Das von den beiden Stützkörpern 10, 11 gehaltene Spannungsrad 7 ist an seinen offenen Enden jeweils mit einem Membranring 8 bzw. 9 verschweisst, der seinerseits im Bereich seiner Innenkante mit einem Ring 23 (Fig. 2) bzw. einem Ring 24 (Fig. 2, 3) verschweisst ist. Zwischen dem Dekkel 8 und dem Ring 23 bzw. dem Deckel 9 und dem Ring 24 wird zweckmässigerweise ein Spalt 27 (Fig. 3) eingehalten, der die Beweglichkeit des Spannungsrades 7 auf den Stützkörpern 10, 11 erhöht.

Wird nämlich in an sich bekannter Weise die Antriebswelle 5 in beliebiger Richtung gedreht, dann dreht sich der Spannungswellenerzeuger mit und seine elliptische Aussenkontur führt zu einer Deformierung der Wandung des Spannungsrades 7 im Bereich des durch die Rollen 17 markierten Radiallagers. Die Ausbeulung der Wandung des Spannungsrades 7 führt zu einer Bewegung an den Enden des Spannungsrades und damit zu einer Veränderung der Breite des Spaltes 27 (Fig. 3) zwischen dem Deckel 9 und dem Ring 24 einerseits sowie dem Deckel 8 und dem Ring 23 andererseits. Das Spannungsrad 7 ist durch die grossen Wege im Bereich der membranartigen Deckel 8, 9 gewissermassen schwimmend von den Stützkörpern 10, 11 gehalten.

In beiden Räumen 20, 21 herrscht Systemdruck. Hierdurch können der Mantel 25 des Stützkörpers 10 und der Mantel 26 des Stützkörpers 11 mit geringer Wandstärke ausgeführt sein, da sie nur auf die Mantelfläche des Spannungsrades 7 unmittelbar einwirkende Kräfte abführen müssen.

Der eine am Gehäuse 3, 4 fest eingespannte Stützkörper 10 ist auf der Antriebswelle 5 zentriert. Der andere Stützkörper 11 stützt sich über ein durch die Rollen 18 gebildetes Drucklager, den Spannungswellenerzeuger 12, ein weiteres, durch die Rollen 19 gebildetes Drucklager und den Rohrabschnitt 28 des einen Stützkörpers 10 am Gehäuse ab.

Ein anderes Ausführungsbeispiel (Fig. 4) sieht vor, dass das Getriebe nach Bauart eines Planetengetriebes gestaltet ist und sich beide Stützkörper 10, 11 über ein gemeinsames Rohr 40 am Gehäuse 3, 4 abstützen. Das Rohr 40 ist im Bereich zwischen den beiden Stützkörpern 10, 11 als Planetenradträger für Planetenräder 43 ausgebildet. Ein Sonnenrad 41 ist mit der Antriebswelle 5 fest verbunden, die mit einer Symmetrieachse 45 fluchtet. In der Fig. 4 ist aus Gründen der Einfachheit der zeichnerischen Darstellung nur die eine Hälfte des Spannungswellengetriebes dargestellt. Über ein Hohlrad 44, die Rollen 17 des Radiallagers und die Ringräder 15, 16 sowie die Hohlwelle 14 erfolgt bei diesem Ausführungsbeispiel der Abtrieb.

*Bezugszeichen*

1 Stellantrieb
2 Schieber
3 Gehäuseteil
4 Gehäuseteil
5 Antriebswelle
6 Abtriebswelle
7 Spannungsrad
8 Membranring
9 Membranring
10 Stützkörper
11 Stützkörper
12 Spannungswellenerzeuger

13 Wellenende
14 Hohlwelle
15 Ringrad
16 Ringrad
17 Rolle
18 Rolle
19 Rolle
20 Raum
21 Raum
22 Motor
23 Ring
24 Ring
25 Mantel
26 Mantel
27 Spalt
28 Rohrabschnitt
29 Boden
30 Boden
40 Rohr
41 Sonnenrad
43 Planetenrad
44 Hohlrad
45 Symmetrieachse

**Patentansprüche**

1. Spannungswellengetriebe mit einem zwischen An- und Abtriebsseite abdichtbaren Gehäuse (3, 4), einem mit einer Antriebswelle (5) verbundenen Spannungswellenerzeuger (12), einem verformbaren, zylinderförmigen Spannungsrad (7), das mit einem Ringrad (15) der Abtriebswelle (6) in Zahneingriff steht, wobei das Spannungsrad (7) an seinen Stirnseiten Stützkörper (10, 11) umgibt, deren stirnseitige Ränder mit dem Spannungsrad (7) dicht verbunden sind, dadurch gekennzeichnet,

— dass die Stützkörper (10, 11) zu beiden Stirnseiten hin in Form eines nach aussen offenen Bechers ausgebildet sind,
— wobei der Boden (29) des antriebseitigen Stützkörpers (10) über einen die Antriebswelle (5) umgebenden Rohrabschnitt (28) am Gehäuse (3, 4) drehfest und dichtend gehalten ist.

2. Getriebe nach Anspruch 1, dadurch gekennzeichnet, dass an den offenen Enden des Spannungsrades (7) jeweils ein Membranring (8, 9) vorgesehen ist, über den das Spannungsrad (7) jeweils mit dem betreffenden Stützkörper (10, 11) nachgiebig verbunden ist.

3. Getriebe nach einem der Ansprüche 1 oder 2, dadurch gekennzeichnet, dass sich der abtriebsseitige Stützkörper (11) über ein Drucklager (Rollen 18), den Spannungswellenerzeuger (12), ein weiteres Drucklager (Rollen 19) und den antriebsseitigen Stützkörper (10) am Gehäuse (3, 4) abstützt.

4. Getriebe nach einem der Ansprüche 1 bis 3, dadurch gekennzeichnet, dass die Stützkörper (10, 11) mit dem Gehäuse (3, 4) über ein gemeinsames Rohr (40) in Verbindung stehen, das am Umfang Öffnungen aufweist, durch die eine Getriebeverbindung zum Spannungswellenerzeuger (12) vorgesehen ist.

5. Getriebe nach Anspruch 4, dadurch gekennzeichnet, dass das Getriebe nach Bauart eines Planetengetriebes gestaltet ist und dass das Rohr (40) für den Antrieb des Spannungswellenerzeugers (Hohlrad 44) über ein Sonnenrad (41) und Planetenräder (43) im Bereich zwischen den beiden Stützkörpern (10, 11) als Planetenradträger ausgebildet ist.

**Revendications**

1. Transmission à tensions ondulatoires, comportant un boîtier (3, 4) pourvu d'une étanchéité entre le côté de l'entraînement et le côté de la sortie, un générateur de tensions ondulatoires (12) raccordé à un arbre d'entraînement (5), une roue déformable (7), qui a une forme générale cylindrique et qui est reliée par engrènement avec une couronne (15) solidaire de l'arbre de sortie (6), la roue déformable (7) entourant, à proximité de ses faces frontales, des organes d'appui (10, 11) dont les bords situés du côté desdites faces frontales sont raccordés de manière étanche avec la roue déformable (7), caractérisée en ce que:

— lesdits organes d'appui (10, 11) sont en forme de gobelets ouverts vers l'extérieur, du côté desdites faces frontales,
— le fond (29) de l'organe d'appui (10) situé du côté de l'entraînement est maintenu de manière étanche et rigide en rotation par rapport au boîtier (3, 4), au moyen d'un élément tubulaire (28) entourant l'arbre d'entraînement (5).

2. Transmission selon la revendication 1, caractérisée en ce qu'il est prévu respectivement aux deux extrémités ouvertes de la roue déformable (7) une membrane annulaire (8, 9) assurant un raccordement flexible entre la roue déformable (7) et l'organe d'appui correspondant (10, 11).

3. Transmission selon la revendication 1 ou 2, caractérisée en ce que l'organe d'appui (11) situé du côté de la sortie est appuyé contre le boîtier (3, 4) par l'intermédiaire d'un palier de butée (rouleaux 18), du générateur de tensions ondulatoires (12), d'un autre palier de butée (rouleaux 19) et de l'organe d'appui (10) situé du côté de l'entraînement.

4. Transmission selon l'une quelconque des revendications 1 à 3, caractérisée en ce que lesdits organes d'appui (10, 11) sont raccordés au boîtier (3, 4) par un tube commun (40) qui comporte, à sa périphérie, des ouvertures à travers lesquelles s'étend un dispositif d'entraînement du générateur de tensions ondulatoires (12).

5. Transmission selon la revendication 4, caractérisée en ce que ledit dispositif d'entraînement est du type à engrenage planétaire, et en ce que ledit tube (40) est agencé en porte-satellites entre les deux organes d'appui (10, 11) pour entraîner le générateur de tensions ondulatoires (roue à denture intérieure 44) par une roue planétaire (41) et des roues satellites (43).

## Claims

1. Strain-wave transmission with a housing (3, 4) sealable between input and output ends, a strain-wave generator (12) connected by means of an input shaft (5), a deformable cylindrical strain wheel (7) meshing with a ring gear (15) arranged on the output shaft (6), the end faces of the strain wheel (7) surrounding support members (10, 11), whose front edges are tightly connected with strain wheel (7), characterized in that
— the support members (10, 11) are open on both end faces showing an external cup-shape,
— the bottom (29) of the input and support member (10) being mounted nonrotatably and sealingly on the housing (3, 4) by means of a tube segment (28) surrounding the input shaft (5).

2. Transmission according to claim 1, characterized in that each open end of the strain wheel (7) there is provided a respective diafram ring (8, 9) by means of which the strain wheel (7) is yieldably connected with the respective support member (10, 11).

3. Transmission according to one of claims 1 or 2, characterized in that the output and support member (11) bears via a thrust bearing (rollers 18), the strain-wave generator (12), another thrust bearing (rollers 19) and the input and support member (10) upon the housing (3, 4).

4. Transmission according to claims 1 to 3, characterized in that the support members (10, 11) are connected with the housing (3, 4) via a common tube (40) having peripheral openings through which a transmission connection is provided to the strain-wave generator (12).

5. Transmission according to claim 4, characterized in that the transmission is designed as a planetary gear and that the tube (40) for driving the strain-wave generator (ring gear 44) via a sun gear (41) and planet gears (43) is designed in the region between the two support members (10, 11) as a planet carrier.

0 124 528

FIG. 1

7

FIG.2

FIG.4

FIG.3